# EUROPEAN PATENT APPLICATION

(11) **EP 4 760 115 A1**
(43) Date of publication of application: **17.06.2026**
(21) Application number: 25841522.3
(22) Date of filing: 04.07.2025
(51) Int. Cl.: F16B 33/00, F16B 37/14, F16B 35/06, F16B 23/00

(54) **BOLT COMBINED WITH INSULATING COVER**

(30) Priority: 17.07.2024 KR 20240094554
(71) Applicant: LG Energy Solution, Ltd., Seoul 07335 (KR)
(72) Inventor: SON, Hong Se, Daejeon 34122 (KR); BAE, Dae Han, Daejeon 34122 (KR); SHIN, Shin Yong, Daejeon 34122 (KR)
(74) Representative: Plasseraud IP
(86) International application number: PCT/KR2025/009595
(87) International publication number: WO 2026/019126

(57) **Abstract**

Disclosed is a bolt including a threaded portion having a groove on an outer surface thereof, a head portion at one end of the threaded portion, the head portion having a diameter greater than the diameter of the threaded portion, and an insulating cover coupled to the head portion, wherein the insulating cover comprises a driver insertion recess, and the head portion comprises a protruding portion or a recessed portion configured to interlock with the insulating cover.

## Description

### [Technical Field]

This application claims the benefit of priority to Korean Patent Application No. 2024-0094554 filed on July 17, 2024, the disclosure of which is incorporated herein by reference in its entirety.

The present invention relates to a bolt having an insulating cover coupled thereto. More particularly, the present invention relates to a bolt with an insulating cover used as a means configured to ensure the insulation of the bolt, which is a coupling member, when assembling a battery module and a battery pack including a plurality of lithium secondary batteries.

### [Background Art]

As it becomes urgent to take measures against environmental pollution, there is increasing interest in reducing greenhouse gas emissions. As an alternative to fossil fuels, therefore, the application of lithium secondary batteries, a type of eco-friendly energy, is expanding.

In order to satisfy the output requirements of devices to which lithium secondary batteries are applied, a plurality of battery cells may be electrically connected to form a battery module, and battery modules may be connected to each other in series/parallel to manufacture a high-output, high-capacity battery pack.

When an electrical connection structure is formed in a battery pack by connecting a plurality of battery modules using a straight busbar, the battery modules may be disposed such that terminals of the battery modules are disposed at a central part of the battery pack, and the busbar may be connected to terminals of the battery modules such that the battery modules can be electrically connected to each other.

A bolt may be used as a means configured to connect the busbar to the terminals of the battery modules, wherein the bolt is generally made of an electrically conductive metal. If thermal runaway occurs in a battery cell of the battery pack, ejecta may be released from the battery cell during thermal runaway, and the ejecta may scatter and adhere to the bolt that connects the terminals of the battery modules to the busbar. If the ejecta from the battery cell scattered in the battery pack adhere to the bolt, short circuit may occur.

In order to prevent such a problem, technology of adding various insulating covers to a head portion of the bolt is used.

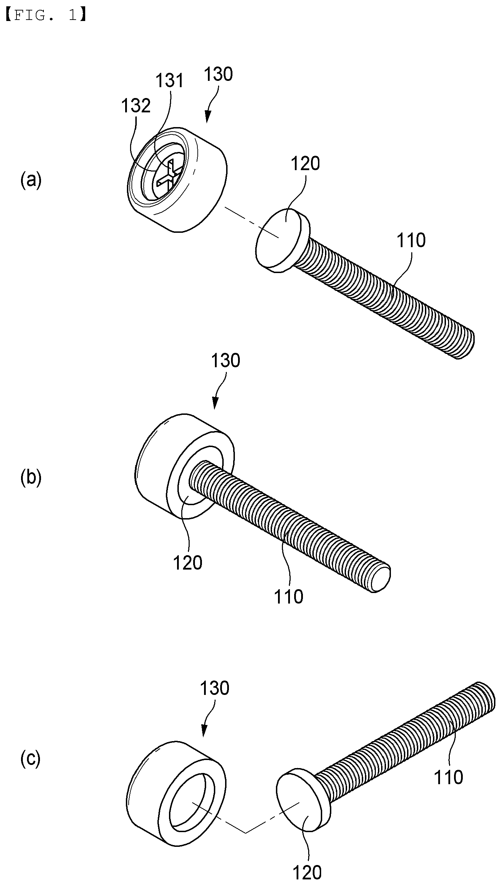

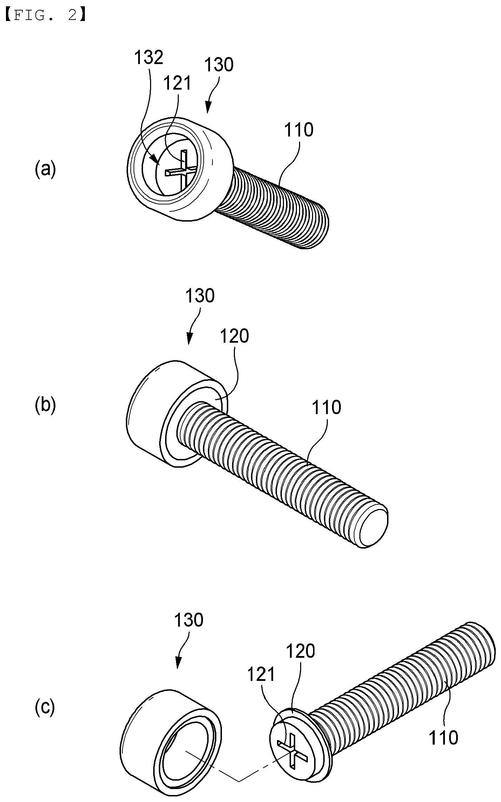

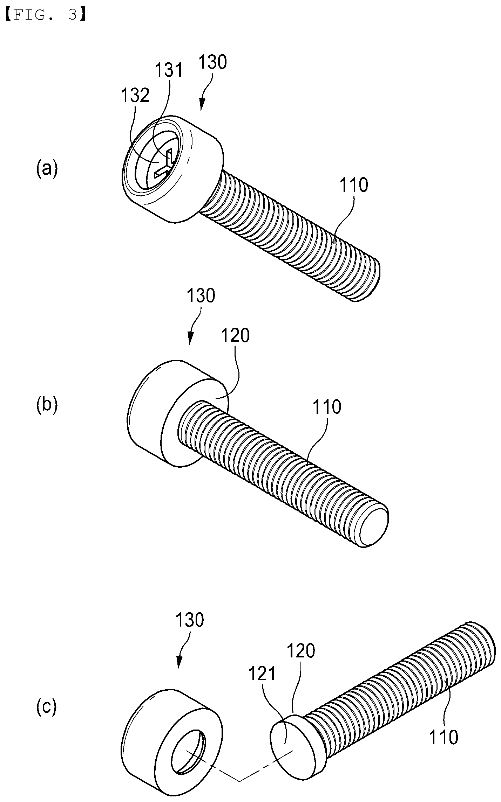

FIG. 1 is an exploded view and a perspective view of a bolt according to a conventional first comparative example, FIG. 2 is an exploded view and a perspective view of a bolt according to a conventional second comparative example, and FIG. 3 is an exploded view and a perspective view of a bolt according to a conventional third comparative example. Referring to FIGs. 1 to 3, the bolt includes a threaded portion 110 having a groove formed on an outer surface thereof and a head portion 120 coupled to one end of the threaded portion 110, wherein an insulating cover 130 is coupled to the head portion 120.

In the bolt shown in FIG. 1, the insulating cover 130 is configured in a cylindrical shape with a bottom so as to cover an upper surface and a side surface of the head portion 120, and a driver insertion recess 131 is formed in a central portion 132. The upper surface of the head portion 120 is formed as a smooth circular flat surface, and a driver may be inserted into the driver insertion recess 131 and rotated to perform bolt fastening in the state in which the insulating cover 130 is coupled to the head portion 120. Since the coupling force between the insulating cover 130 and the head portion 120 is low, however, the insulating cover 130 may separate from the head portion 120 and may spin uselessly during bolt tightening.

In the bolt shown in FIG. 2, the insulating cover 130 is configured as a ring shape with an open central portion 132. When the insulating cover 130 is coupled to the head portion 120, therefore, the head portion 120 is exposed through the central portion 132 of the insulating cover 130. Since the head portion 120 has a recessed portion 121, a driver may be inserted into the recessed portion 121 to tighten the bolt. Since the electrically conductive head portion 120 is exposed, however, a process of applying heat-resistant silicone to the head portion 120 to insulate the head portion is required.

In the bolt shown in FIG. 3, the insulating cover 130 is configured to completely wrap around an upper surface, a side surface, and a part of a lower surface of the head portion 120. In this case, the bolt must be manufactured by insert injection molding; however, the mold production cost for insert injection molding is higher than the manufacturing cost of the insulating cover shown in FIGs. 1 and 2. Furthermore, given the nature of bolts requiring production in the hundreds of thousands, repeated mold costs are necessary, which may be a factor in cost increases.

Therefore, there is a demand for technology capable of, when fastening a bolt used to couple electrical components in a battery pack in the state in which an insulating cover is stably coupled to a head portion of the bolt, preventing the insulating cover from uselessly slipping on the head portion of the bolt, thereby achieving stable bolt coupling while ensuring insulation of the bolt.

### [Disclosure]

### [Technical Problem]

The present invention has been made in view of the above problems, and it is an object of the present invention to provide a bolt having an insulating cover coupled thereto configured such that the coupling force between the insulating cover and a head portion is increased to achieve stable coupling between components to which the bolt is fastened and to ensure insulation of the bolt.

### [Technical Solution]

A bolt according to the present invention to accomplish the above object includes a threaded portion having a groove on an outer surface thereof, a head portion at one end of the threaded portion, the head portion having a diameter greater than the diameter of the threaded portion, and an insulating cover coupled to the head portion, wherein the insulating cover includes a driver insertion recess, and the head portion includes a protruding portion or a recessed portion configured to interlock with the insulating cover.

The insulating cover may be coupled to the head portion so as to cover the entirety of an upper surface of the head portion.

A lower part of the insulating cover may include a concave coupling portion wrapping around an upper surface and a side surface of the head portion.

A recessed portion corresponding to the protruding portion on the head portion may be in a bottom surface of the coupling portion.

A protruding portion corresponding to the recessed portion in the head portion may be on the bottom surface of the coupling portion.

The driver insertion recess in the insulating cover may be in relief on a coupling portion on an inner surface of the insulating cover, and the head portion may include a receiving recess configured to receive the driver insertion recess.

A bottom of the driver insertion recess may be in tight contact with an inner surface of the receiving recess in a state in which the insulating cover is coupled to the head portion.

The head portion may have a step on an outer periphery thereof such that the outer periphery is thinner than a central portion thereof.

A plurality of slits may be in an outer periphery of the head portion, the plurality of slits may extend from the outer periphery of the head portion toward the center of the head portion, and a plurality of projections configured to be inserted respectively into the plurality of slits may be on a lower part of the insulating cover.

A plurality of slits may be in the outer periphery of the head portion, the plurality of slits may be inclined at an angle of greater than -90° to less than 0° or an angle of greater than 0° to less than 90° relative to a circumferential direction of the head portion, and a plurality of projections configured to be inserted respectively into the plurality of slits may be on the lower part of the insulating cover.

The plurality of slits may be inclined at the same angle.

The plurality of slits may be four or more slits, and the angle of the plurality of slits inclined relative to the circumferential direction of the head portion may be configured as a repeating pattern of -x° and y°, where 0<x<90 and 0<y<90.

The insulating cover may include a central portion having the driver insertion recess therein and a peripheral portion outside the central portion, and the central portion may be depressed further than the peripheral portion.

In addition, the present invention may provide various combinations of the above solving means.

### [Advantageous Effects]

When battery modules are connected to each other using a bolt according to the present invention, even if ejecta released from a battery cell due to thermal runaway scatters and adheres to a head portion of the bolt, it is possible to prevent the occurrence of short circuit since the head portion is completely covered with an insulating cover.

In addition, the coupling force between the bolt and the insulating cover is increased, whereby it is possible to stably fix components coupled using the bolt.

Furthermore, it is possible to omit a separate process for insulating the head portion of the bolt, whereby it is possible to simplify an assembly process.

### [Description of Drawings]

FIG. 1 is an exploded view and a perspective view of a bolt according to a conventional first comparative example.
FIG. 2 is an exploded view and a perspective view of a bolt according to a conventional second comparative example.
FIG. 3 is an exploded view and a perspective view of a bolt according to a conventional third comparative example.
FIG. 4 is an exploded view and a perspective view of a bolt according to a first embodiment of the present invention.
FIG. 5 is an exploded view and a perspective view of a bolt according to a second embodiment of the present invention.
FIG. 6 is an exploded view and a perspective view of a bolt according to a third embodiment of the present invention.
FIG. 7 is an exploded view and a perspective view of a bolt according to a fourth embodiment of the present invention.
FIG. 8 is an exploded view and a perspective view of a bolt according to a fifth embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

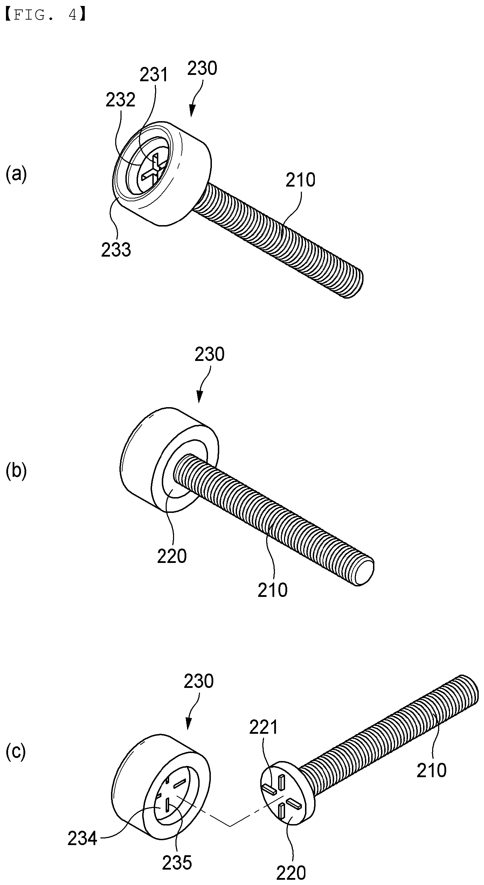

FIGs. 4 to 8 are exploded views and perspective views of bolts according to various embodiments of the present invention.

The bolt according to the present invention includes a threaded portion 210 having a groove formed on an outer surface thereof, a head portion 220 located at one end of the threaded portion 210 and having a diameter greater than the diameter of the threaded portion 210, and an insulating cover 230 coupled to the head portion 220. The insulating cover 230 may be coupled to the head portion 220 so as to cover the entirety of an upper surface of the head portion 220. Specifically, the insulating cover 230 may be added to the upper surface and a side surface of the head portion 220.

A concave coupling portion formed so as to wrap around the upper surface and the side surface of the head portion 220 may be formed at a lower part of the insulating cover 230.

The insulating cover 230 includes a central portion 232 having a driver insertion recess 231 formed therein and a peripheral portion 233 provided outside the central portion 232, wherein the central portion 232 may be depressed further than the peripheral portion 233.

However, of course, a configuration in which the central portion protrudes in a hemispherical shape and the peripheral portion extends toward the head portion is also possible.

In addition, the head portion may have a polygonal planar shape in addition to a planar circular shape, and the insulating cover may be configured so as to correspond in shape to the head portion such that the insulating cover can be coupled to the head portion in tight contact therewith.

A protruding portion or a recessed portion for interlocking with the insulating cover 230 may be formed at the head portion 220. A recessed portion corresponding to the protruding portion formed on the head portion 220 may be formed in a bottom surface 234 of the insulating cover 230, or a protruding portion corresponding to the recessed portion formed in the head portion 220 may be formed on the bottom surface 234 of the insulating cover 230, the protruding portion and the recessed portion may interlock with each other, whereby the coupling force between the head portion 220 and the insulating cover 230 may be increased. When the bolt according to the present invention is used to connect the busbar to terminals of a battery module, therefore, it is possible to prevent separation of the insulating cover 230 from the head portion 220 and useless spinning of the insulating cover and to increase the coupling force of the bolt, whereby it is possible to stably couple the busbar to the terminals of the battery module.

The material of the insulating cover 230 is not particularly limited as long as the material has insulating properties, and, for example, may be at least one selected from the group consisting of silicone, polyethylene, polypropylene, rubber, ceramics, polycarbonate, and polybutylene terephthalate.

FIG. 4 is an exploded view and a perspective view of a bolt according to a first embodiment of the present invention.

Referring to FIG. 4, the bolt according to the first embodiment is configured such that a protruding portion 221 is formed on the upper surface of the head portion 220 and a recessed portion 235 is formed in the bottom surface 234 of the coupling portion of the insulating cover 230 that is coupled to the upper surface of the head portion 220. The recessed portion 235 formed in the bottom surface 234 of the coupling portion is configured so as to correspond to the protruding portion 221 formed on the head portion 220. The recessed portion 235 is formed so as to have the same size and shape as the protruding portion 221, and is formed at a position corresponding thereto. When the insulating cover 230 is coupled to the head portion 220, the protruding portion 221 is inserted into the recessed portion 235, whereby the insulating cover 230 and the head portion 220 may be stably coupled to each other. When the bolt is rotated to fasten the bolt, therefore, the coupled state between the insulating cover 230 and the head portion 220 may be stably maintained.

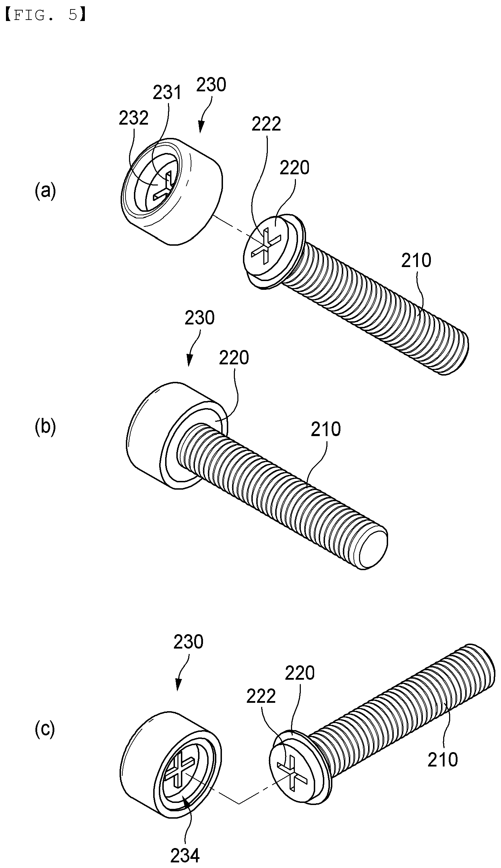

FIG. 5 is an exploded view and a perspective view of a bolt according to a second embodiment of the present invention.

Referring to FIG. 5, the bolt according to the second embodiment is configured such that a recessed portion 222 is formed on the upper surface of the head portion 220 and a protruding portion is formed in the bottom surface 234 of the coupling portion of the insulating cover 230 that is coupled to the upper surface of the head portion 220. The protruding portion on the bottom surface 234 is formed as the result of the driver insertion recess 231 formed in the insulating cover 230 protruding in relief from the bottom surface 234 of the coupling portion formed on an inner surface of the insulating cover 230, and the recessed portion 222 formed in the head portion 220 becomes a receiving recess that receives the driver insertion recess 231.

When bolt fastening is performed in the state in which a driver is inserted into the driver insertion recess 231, the bottom of the driver insertion recess 231 may be in tight contact with an inner surface of the receiving recess in the state in which the insulating cover 230 is coupled to the head portion 220 such that the rotational force of the driver can be transmitted to the bolt. Therefore, since the driver inserted into the driver insertion recess can rotate in a state of being inserted into the receiving recess, the driver may rotate the insulating cover and the head portion together.

Meanwhile, the shape of the head portion 220 may be configured such that an upper surface and a lower surface of an outer periphery thereof are identical, as in the bolt according to the first embodiment, or may be configured such that a step is formed on the outer periphery of the head portion 220, as in the bolt according to the second embodiment. That is, the head portion 220 may have a shape in which the outer periphery thereof is thinner than a central portion thereof. When the head portion 220 has a step, as in the bolt according to the second embodiment, the insulating cover 230 may extend only up to the upper surface of the outer periphery of the head portion 220.

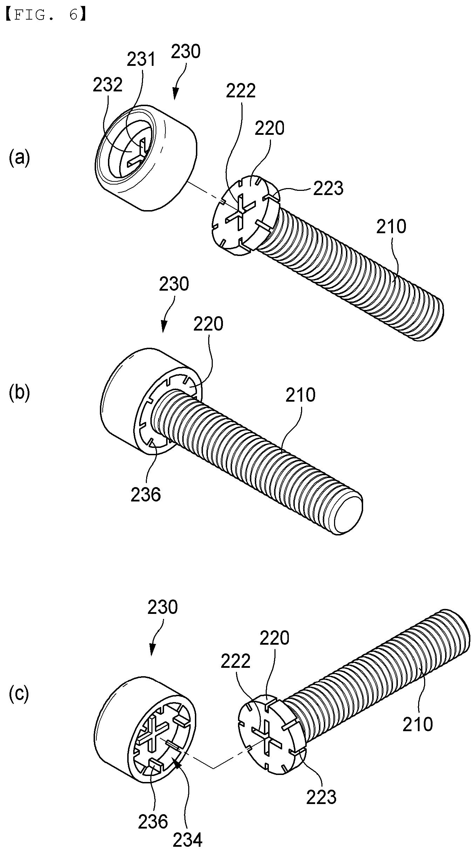

FIG. 6 is an exploded view and a perspective view of a bolt according to a third embodiment of the present invention.

Referring to FIG. 6, the bolt according to the third embodiment is configured such that a recessed portion 222 is formed in the upper surface of the head portion 220 and a protruding portion is formed on the bottom surface 234 of the insulating cover 230, as in the bolt according to the second embodiment.

The bolt according to the third embodiment is configured such that a plurality of slits 223 is formed in the outer periphery of the head portion 220 and the plurality of slits 223 extends from the outer periphery of the head portion 220 toward the center of the head portion 220. A plurality of projections 236 configured to be inserted respectively into the plurality of slits 223 is formed on a lower part of the insulating cover 230.

Since the bolt according to the third embodiment includes a plurality of slits 223 and a plurality of projections 236 inserted respectively into the plurality of slits 223, the coupling force between the insulating cover 230 and the head portion 220 may be increased. In particular, since the projections 236 extend through the head portion 220 in the thickness direction of the head portion 220 and are then inserted into the slits 223, when the insulating cover 230 is rotated using a driver coupled to the driver insertion recess 231 of the insulating cover, the rotational force applied to the insulating cover 230 may be transmitted to the head portion 220, whereby the head portion 220 may be rotated. Consequently, it is possible to prevent separation or detachment of the insulating cover 230 from the head portion 220.

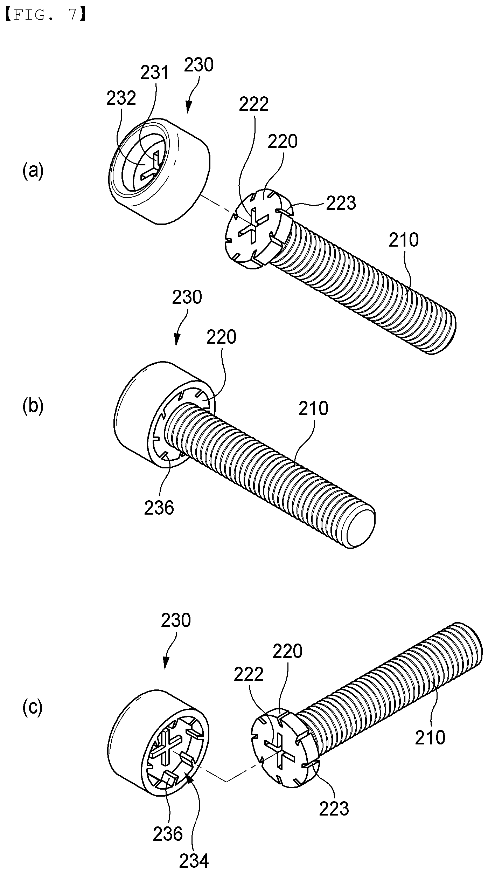

FIG. 7 is an exploded view and a perspective view of a bolt according to a fourth embodiment of the present invention.

Referring to FIG. 7, the bolt according to the fourth embodiment is similar to the bolt according to the third embodiment in that a plurality of slits 223 is formed in the head portion 220 and a plurality of projections 236 configured to be inserted respectively into the plurality of slits 223 is formed on the lower part of the insulating cover 230.

However, the direction of the plurality of slits 223 in the bolt according to the fourth embodiment is different from the direction of the plurality of slits formed in the bolt according to the third embodiment.

In the bolt according to the fourth embodiment, the plurality of slits 223 is formed so as to be inclined at an angle of greater than -90° to less than 0° or an angle of greater than 0° to less than 90° relative to a circumferential direction of the head portion 220.

The circumferential direction refers to a tangential direction of the head portion 220, which is circular in plan when viewed from above. When viewing the head portion from above, the plurality of slits 223 must not be aligned with the tangential direction of the head portion, and is also formed so as not to be perpendicular to the tangential direction. That is, the plurality of slits is formed so as to be inclined at an angle of greater than -90° to less than 0° or an angle of greater than 0° to less than 90° relative to the tangential direction.

When the slits are formed so as to be inclined, as described above, the rotational force for rotating the insulating cover 230 may be more effectively transmitted to the head portion 220 than in the bolt according to the third embodiment.

In a specific example, all of the plurality of slits may be formed so as to have the same inclination angle, as shown in FIG. 7. In such a case, when the plurality of slits 223 is formed so as to be inclined at an angle of greater than -90° to less than 0° relative to the circumferential direction of the head portion 220, the rotational force for rotating the insulating cover may be effectively transmitted to the head portion 220.

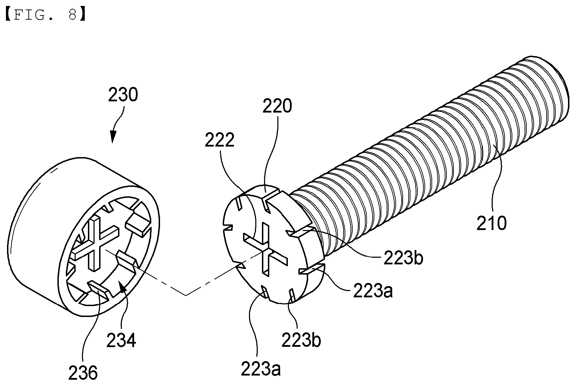

FIG. 8 is an exploded view and a perspective view of a bolt according to a fifth embodiment of the present invention.

Referring to FIG. 8, the bolt according to the fifth embodiment is different from the bolt according to the fourth embodiment in that the direction of the plurality of slits 223 is not uniform.

The bolt according to the fifth embodiment may have four or more slits 223a and 223b, and FIG. 8 shows that eight slits 223a and 223b are formed. The angle of the plurality of slits 223a and 223b inclined relative to the circumferential direction of the head portion 220 may be configured as a repeating pattern of -x° and y°. Here, each of x and y may be a value of greater than 0 to less than 90. In FIG. 8, the inclination angle of the slit 223a is greater than -90° to less than 0°, and the inclination angle of the slit 223b is greater than 0° to less than 90°.

When the plurality of slits 223 is alternately inclined in the - direction and the + direction, as described above, the rotational force for rotating the insulating cover may be effectively transmitted to the head portion when loosening the bolt as well as when tightening the bolt.

Those skilled in the art to which the present invention pertains will appreciate that various applications and modifications are possible within the scope of the present invention based on the above description.

### (Description of Reference Symbols)

110, 210: Threaded portion
120, 220: Head portion
121: Recessed portion
130, 230: Insulating cover
131, 231: Driver insertion recess
132, 232: Central portion
221: Protruding portion
222, 235: Recessed portion
223, 223a, 223b: Slit
233: Peripheral portion
234: Bottom surface
236: Projection

## Claims

1. A bolt comprising:
a threaded portion having a groove on an outer surface thereof;
a head portion at one end of the threaded portion, the head portion having a diameter greater than a diameter of the threaded portion; and
an insulating cover coupled to the head portion, wherein
the insulating cover comprises a driver insertion recess, and
the head portion comprises a protruding portion or a recessed portion configured to interlock with the insulating cover.

2. The bolt according to claim 1, wherein the insulating cover is coupled to the head portion so as to cover an entirety of an upper surface of the head portion.

3. The bolt according to claim 1, wherein a lower part of the insulating cover comprises a concave coupling portion wrapping around an upper surface and a side surface of the head portion.

4. The bolt according to claim 3, wherein a recessed portion corresponding to the protruding portion on the head portion is in a bottom surface of the coupling portion.

5. The bolt according to claim 3, wherein a protruding portion corresponding to the recessed portion in the head portion is on a bottom surface of the coupling portion.

6. The bolt according to claim 1, wherein
the driver insertion recess in the insulating cover is in relief on a coupling portion on an inner surface of the insulating cover, and
the head portion comprises a receiving recess configured to receive the driver insertion recess.

7. The bolt according to claim 6, wherein a bottom of the driver insertion recess is in tight contact with an inner surface of the receiving recess in a state in which the insulating cover is coupled to the head portion.

8. The bolt according to claim 1, wherein the head portion has a step on an outer periphery thereof such that the outer periphery is thinner than a central portion thereof.

9. The bolt according to claim 1 or 6, wherein
a plurality of slits is in an outer periphery of the head portion,
the plurality of slits extends from the outer periphery of the head portion toward a center of the head portion, and
a plurality of projections configured to be inserted respectively into the plurality of slits is on a lower part of the insulating cover.

10. The bolt according to claim 1 or 6, wherein
a plurality of slits is in an outer periphery of the head portion,
the plurality of slits is inclined at an angle of greater than -90° to less than 0° or an angle of greater than 0° to less than 90° relative to a circumferential direction of the head portion, and
a plurality of projections configured to be inserted respectively into the plurality of slits is on a lower part of the insulating cover.

11. The bolt according to claim 10, wherein the plurality of slits is inclined at the same angle.

12. The bolt according to claim 10, wherein
the plurality of slits is four or more slits, and
an angle of the plurality of slits inclined relative to the circumferential direction of the head portion is configured as a repeating pattern of -x° and y° (0<x<90 and 0<y<90).

13. The bolt according to claim 1, wherein
the insulating cover comprises a central portion having the driver insertion recess therein and a peripheral portion outside the central portion, and
the central portion is depressed further than the peripheral portion.
